# EUROPÄISCHE PATENTSCHRIFT

(11) **EP 3 020 531 B1**
(45) Veröffentlichungstag und Bekanntmachung des Hinweises auf die Patenterteilung: **21.02.2018**
(21) Anmeldenummer: 15195047.4
(22) Anmeldetag: 17.11.2015
(51) Int. Cl.: B29C 49/42, B29C 49/06, B29C 49/36, B29C 49/78, B29K 105/00, B29L 31/00

(54) **DRUCKREGELVORRICHTUNG**
PRESSURE CONTROL DEVICE
DISPOSITIF DE RÉGULATION DE PRESSION

(30) Priorität: 17.11.2014 DE 102014116806
(43) Veröffentlichungstag der Anmeldung: 18.05.2016
(73) Patentinhaber: Krones AG, 93073 Neutraubling (DE)
(72) Erfinder: Brunner, Andreas, 93073 Neutraubling (DE); Höllriegl, Thomas, 93073 Neutraubling (DE)
(74) Vertreter: Bittner, Bernhard

(56) Entgegenhaltungen:
- EP-B1- 0 726 511
- DE-A1-102006 061 301
- DE-B3-102008 015 776
- US-A1- 2012 001 370
- US-A1- 2012 177 770

## Beschreibung

Die vorliegende Erfindung betrifft eine Druckregelvorrichtung, insbesondere einen Domdruckregler, zum Regeln eines Blasdrucks sowie eine Vorrichtung zum Umformen von Kunststoffvorformlingen zu Kunststoffbehältnissen und ein Verfahren zum Umformen von Kunststoffvorformlingen zu Kunststoffbehältnissen gemäß dem jeweiligen Oberbegriff der Patentansprüche 1, 10 und 11.

Die Druckschriften US 2012/177770 A1, EP 0 726 511 B1 und US 2012/001370 zeigen Druckregelvorrichtungen.

Die hier beschriebene Druckregelvorrichtung zum Regeln eines Blasdrucks innerhalb einer Blasmaschine umfasst eine Regelkammer, wobei die Regelkammer zumindest einen Primärdruckanschluss zum Einleiten eines Primärmediums mit einem Primärdruck in die Regelkammer sowie zumindest einen Sekundärdruckanschluss zum Ausleiten des Primärmediums mit einem Sekundärdruck aus der Regelkammer umfasst, und wobei innerhalb der Regelkammer ein Regelkolben verschieblich gelagert ist.

Bei dem Primärmedium kann es sich in einem Arbeitsbetrieb der hier beschriebenen Druckregelvorrichtung um ein Blasmedium, beispielsweise Blasluft handeln, wobei es sich bei dem Primärmedium in einem Reinigungs- und/oder Sterilisationsbetrieb beispielsweise um ein Reinigungs- und/oder Sterilisationsmedium handeln kann, welches diejenigen Fluidwege der Druckregelvorrichtung, welche auch von der Blasluft während des Arbeitsbetriebs durchströmt werden, reinigt/sterilisiert. Mit anderen Worten können also mit obig beschriebener Druckregelvorrichtung zumindest teilweise, vorzugsweise jedoch auch vollständig identische Fluidwege, welche während des Arbeitsbetriebs die Blasluft weiterleiten, auch mittels des Sterilisationsmediums, im Reinigungsbetrieb durch das Sterilisationsmedium zumindest teilweise, vorzugsweise jedoch vollständig sterilisiert werden.

Zudem umfasst die hier beschriebene Druckregelvorrichtung einen Regelkolben, der in Abhängigkeit einer Schaltstellung einer Ventilsteuereinheit zum Steuern und/oder Einstellen des Primärdrucks und/oder des Sekundärdrucks in einer Offen- und in einer Zu-Stellung betreibbar ist. Insofern ist daher vorgesehen, dass der Regelkolben innerhalb der Regelkammer, über eine Druckkraftbeaufschlagung der Ventilsteuereinrichtung, verschoben werden kann.

Dabei wird nur in der Offen-Stellung des Regelkolbens das Primärmedium von dem Primärdruckanschluss durch die Regelkammer hindurch zu dem Sekundärdruckluftanschluss geleitet. Somit kann die obig erwähnte Ventilsteuereinrichtung als alleiniges Steuer- und Regelinstrument angesehen werden, mittels dessen der Regelkolben zwischen der Offen-Stellung und der Zu-Stellung hin und her bewegt werden kann.

Die Ventilsteuereinrichtung umfasst eine Steuerkammer, wobei die Steuerkammer wiederum zumindest einen Steuerdruckanschluss zum Einleiten eines Steuermediums in die Steuerkammer umfasst, und wobei innerhalb der Steuerkammer ein mit Druckluft beaufschlagbares Steuermittel angeordnet ist. Das Steuermittel steht mit dem Regelkolben derart in Wirkverbindung, dass bei einer Erhöhung des Sekundärdrucks des Primärmediums über ein Druckniveau des Steuerdrucks des Steuermediums der Regelkolben von einer Offen- in eine Zu-Stellung übergeht und umgekehrt bei einer Verringerung des Sekundärdrucks unter ein Druckniveau des Steuerdrucks der Regelkolben von einer Zu- in eine Offen-Stellung übergeht.

Beispielsweise sind das Steuermittel und der Regelkolben über ein Verbindungsgestänge rein mechanisch miteinander verbunden. Denkbar ist jedoch auch, dass das Steuermittel und der Regelkolben alternativ oder zusätzlich über einen pneumatischen Mechanismus in fluidischer Wirkverbindung miteinander stehen.

Mit anderen Worten bewirkt eine derartige Anordnung des Steuermittels relativ zu dem Regelkolben, dass eine Bewegung und/oder Verformung des Steuermittels unmittelbar auch mit einer entsprechenden Bewegung des Regelkolbens einhergeht.

**Derartige Druckregelvorrichtungen sind jedoch bereits aus dem Stand der Technik bekannt. Bekannt sind daher beispielsweise auch solche Druckregelvorrichtungen, bei denen das Steuermittel in Form eines Steuerkolbens ausgebildet ist. Wird bei solchen bereits bekannten Druckregelvorrichtungen ein Steuerdruck angelegt, bewegt sich der Steuerkolben beispielsweise nach unten, wenn eine Kraft einer Druckfeder, welche der Bewegung des Steuerkolbens und/oder des Regelkolbens entgegenwirkt, überwunden wird. Wird daher der Steuerkolben nach unten bewegt, bewegt sich auch der Regelkolben mit seiner Dichtung nach unten. Es entsteht dadurch ein Spalt zwischen der Dichtung, welche vorzugsweise an dem Regelkolben befestigt ist, und einer Dichtkante eines Innenraums der Regelkammer, so dass Luftdruck von dem Primärdruckanschluss in den Sekundärdruckanschluss übergeht.**

Alternativ zu den Ausführungen mit Steuerkolben, sind aus dem Stand der Technik auch Druckregelvorrichtungen bekannt, die eine Membran als Steuermittel aufweisen. Während sich solche aus dem Stand der Technik bekannten Druckregler mit Membranen für den Einsatz in den Blasluftsträngen von herkömmlichen Streckblasmaschinen bewährt haben, eignen sie sich leider nicht für den Einsatz in einer aseptischen Streckblasmaschine. Das Material der Membran hält auf Dauer den hohen aseptischen Anforderungen nicht stand, da während zumindest eines Betriebszustands, nämlich während der Sterilisation, ein Sterilisationsmittel zumindest teilweise die Steuermembran kontaktiert, Bei dem Sterilisationsmittel handelt es sich in der Regel um gasförmiges H2O2, welches mitunter ätzende und stark oxidierende Eigenschaften aufweist und so das Material schädigt.

Man ging in der Vergangenheit deshalb dazu über, die aus dem Stand der Technik bekannte Variante einer Druckregelvorrichtung mit Steuerkolben in einer aseptischen Blasmaschine einzusetzen, Aufgrund der enorm hohen Belastungen im Blasprozess durch Druckluft, Hitze und Reibung ist jedoch auch der Steuerkolben nicht auf Dauer in einer aseptischen Blasmaschine einsetzbar. Auch die Regeleigenschaften des Ventils sind bei der Kolbenvariante nicht zufriedenstellend.

Andererseits ist es jedoch besonders vorteilhaft, wenn der gesamte Fertigungsprozess beispielsweise auch bis hin zu einem befüllten Behältnis vollständig in einer sterilen Umgebung durchgeführt werden kann.

Es ist daher eine Aufgabe der vorliegenden Erfindung, die oben genannten Probleme zu überwinden und somit eine Druckregelvorrichtung, insbesondere einen Domdruckregler, zum Regeln eines Blasdrucks innerhalb einer Blasmaschine anzugeben, welche in besonders einfacher und kostengünstiger Art und Weise sehr betriebsstabil und zudem widerstandsfähig gegenüber Reinigungsvorgängen, insbesondere Sterilisationsvorgängen, ist und gleichzeitig innerhalb eines Sterilraums betreibbar ist.

Diese Aufgabe wird durch den Gegenstand des Patentanspruches 1 gelöst. Vorteilhafte Ausgestaltungen sind in den abhängigen Ansprüchen beschrieben.

Um nun eine Druckregelvorrichtung anzugeben, welche die oben genannten Probleme beseitigt, macht die vorliegende Druckregelvorrichtung unter anderem von der Idee Gebrauch, dass an einem unteren Bewegungsanschlag innerhalb der Steuerkammer zumindest eine Dichtungseinrichtung zwischen dem Sekundärluftanschluss und dem Steuermittel angeordnet ist, welche eine Kontaktierung des Primärmediums mit dem Steuermittel zumindest teilweise, vorzugsweise vollständig, unabhängig von dem Steuerdruck und/oder dem Primärdruck verhindert. Das heißt, dass egal wie hoch oder niedrig die einzelnen Drücke gewählt sind in keinem Fall die Membran in Kontakt mit dem Sterilisationsmedium kommen kann. Generell ist jedoch denkbar, dass das Steuermittel nur im Reinigungsbetrieb die Dichtungseinrichtung direkt kontaktiert.

Gemäß zumindest einer Ausführungsform umfasst die hier beschriebene Druckregelvorrichtung, insbesondere der hier beschriebene Domdruckregler zum Regeln eines Blasdrucks innerhalb einer Blasmaschine eine Regelkammer, wobei die Regelkammer zumindest einen Primärdruckanschluss zum Einleiten eines Primärmediums mit einem Primärdruck in die Regelkammer sowie zumindest einen Sekundärdruckanschluss zum Ausleiten des Primärmediums mit einem Sekundärdruck aus der Regelkammer umfasst, wobei innerhalb der Regelkammer ein Regelkolben verschieblich gelagert ist.

Dabei ist der Regelkolben in Abhängigkeit einer Schaltstellung einer Ventilsteuereinrichtung zum Steuern und/oder Einstellen des Primärdrucks und/oder des Sekundärdrucks in einer Offen- und in einer Zu-Stellung betreibbar, wobei nur in der Offen-Stellung des Regelkolbens das Primärmedium von dem Primärdruckanschluss durch die Regelkammer hindurch zu dem Sekundärdruckanschluss geleitet wird.

Zudem umfasst die hier beschriebene Druckregelvorrichtung eine Ventilsteuereinrichtung, welche wiederum eine Steuerkammer umfasst, wobei die Steuerkammer zumindest einen Steuerdruckanschluss zum Einleiten eines Steuermediums in die Steuerkammer umfasst und innerhalb der Steuerkammer ein mit Druckluft beaufschlagbares Steuermittel angeordnet ist, wobei das Steuermittel mit dem Regelkolben derart in Wirkverbindung steht, dass bei einer Erhöhung des Steuersekundärdrucks des Primärmediums über ein Druckniveau des Steuerdrucks des Steuermediums der Regelkolben von einer Offen- in eine Zu-Stellung übergeht und umgekehrt bei einer Verringerung des Sekundärdrucks unter ein Druckniveau des Steuerdrucks der Regelkolben von einer Zu- in eine Offen-Stellung übergeht.

Erfindungsgemäß ist an einem unteren Bewegungsanschlag innerhalb der Steuerkammer zumindest eine Dichtungseinrichtung zwischen dem Sekundärdruckanschluss und dem Steuermittel angeordnet, wobei eine Kontaktierung des Primärmediums mit dem Steuermittel zumindest teilweise, vorzugsweise vollständig, unabhängig von dem Steuerdruck und/oder dem Primärdruck verhindert ist.

Gemäß zumindest einer Ausführungsform ist das mit Druck beaufschlagbare Steuermittel in Form einer Steuerdruckmembran ausgeführt, welche die Steuerkammer in zwei Druckkammern unterteilt und fluidisch voneinander trennt. Mit anderen Worten kann daher die Steuerkammer in eine obere, der Regelkammer abgewandte Druckkammer und eine untere, der Regelkammer zugewandten Druckkammer unterteilt werden.

Insofern macht die vorliegende Erfindung sich auch die Erkenntnis zu Nutze, dass zur Vereinfachung von Schaltungsvorgängen als Steuermittel beispielsweise eine Steuermembran in Frage kommt und andererseits die Steuermembran deshalb genutzt werden kann, da diese im Gegensatz zu dem was im Stand der Technik beschrieben ist, durch die hier beschriebene Dichtungseinrichtung vor ätzenden und/oder oxidierenden Eigenschaften des Sterilisationsmediums geschützt ist.

Denkbar ist, dass dann die Steuerdruckmembran an ihrer der unteren Druckkammer zugewandten Seite mit einer Membranscheibe versehen ist und an der der oberen Druckkammer zugewandten Seite mit einer Platte in lateraler Richtung umschlossen ist. "Laterale Richtung" ist daher eine Richtung parallel zu einer Haupterstreckungsrichtung der Steuerdruckmembran. Wird nämlich innerhalb eines Reinigungsbetriebs ein Sterilisationsmedium, beispielsweise Wasserstoffperoxid oder ein sonstiges oxidierendes/sterilisierendes Medium durch die Regelkammer hindurch geleitet, wird der Steuerdruck derart relativ zum Primärdruck gewählt, dass die Steuerdruckmembran an dem unteren Bewegungsanschlag innerhalb der Steuerkammer anschlägt.

**Im unteren Bewegungsanschlag ist daher eine beispielsweise flächige Dichtung als eine mögliche Ausführungsform der oben beschriebenen Dichtungseinrichtung eingelassen, wobei die Dichtung sich wiederum vorzugsweise in lateraler Richtung erstreckt. Insofern ist die Dichtung dann zwischen dem Sterilisationsmedium und der Steuerdruckmembran angeordnet, so dass die Steuerdruckmembran nicht mit dem Wasserstoffperoxid, d.h. also dem Sterilisationsmedium, in Kontakt kommen kann. Die Steuerdruckmembran ist daher vor einem chemischen Angriff durch das Sterilisationsmedium geschützt. Eine derartige Steuerung und Beeinflussung der Steuerdruckmembran kann insofern dadurch erreicht werden, als dass nämlich die untere Druckkammer mit der Sekundärkammer über zumindest einen Kanal fluidisch miteinander verbunden ist. Fließt nämlich aus der Regelkammer Blasluft und/oder das Sterilisationsmedium ab, wird dieses automatisch auch über ein Leitungssystem in Richtung der unteren Druckkammer geführt und wird daher - sofern eben keine Dichtung vorhanden ist - in die untere Druckkammer eingeleitet und dann von der unteren Druckkammer über einen Kanal dem Sekundärdruckanschluss zugeführt. Die hier beschriebene Dichtungseinrichtung bedeckt jedoch im unteren Bewegungsanschlag die Steuerdruckmembran, so dass im unteren Bewegungsnaschlag das Sterilisationsmedium mit der Steuerdruckmembran nicht in Kontakt treten kann.**

Es wird daher - sofern die Steuerdruckmembran in Richtung oder an dem unteren Bewegungsanschlag angeschlagen ist - eine gasdichte Verbindung zwischen der Steuerdruckmembran und dem unteren Bewegungsanschlag über die Dichtungseinrichtung erreicht.

Gemäß zumindest einer Ausführungsform handelt es sich bei dem Primärmedium um Blasluft zum Aufblasen von Kunststoffvorformlingen zu Kunststoffbehältnissen während eines Arbeitsbetriebs. Insofern kann die hier beschriebene Druckregelvorrichtung in einer sterilen Streckblasvorrichtung verbaut sein, so dass zwischen einem Arbeitsbetrieb und einem Reinigungsbetrieb über ein Ventilsteuerungssystem besonders einfach umgeschaltet werden kann. Es wurde nämlich die Erkenntnis gewonnen, dass die hier beschriebene Dichtungseinrichtung - obwohl diese als zusätzliches Dichtungselement an dem unteren Bewegungsanschlag innerhalb der Steuerkammer angeordnet ist - im Hinblick auf die obig beschriebenen Steuerungs- und Regeleigenschaften keine negativen Auswirkungen hat. Somit konnte in Erfahrung gebracht werden, dass Regelgenauigkeit und Betriebsstabilitäten trotz des zusätzlichen Einbaus eines weiteren Bauelements, also der der hier beschriebenen Dichtungseinrichtung, Regelgenauigkeit und Betriebsstabilitäten enorm erhöht werden konnten.

Gemäß zumindest einer Ausführungsform handelt es sich bei dem Primärmedium um ein gasförmiges Sterilisationsmedium, welches in einem Reinigungsbetrieb ausgehend von dem Primärdruckanschluss durch die Regelkammer hindurch und über den Sekundärdruckanschluss aus der Regelkammer wieder ausgeleitet wird. Wie obig bereits erwähnt, werden daher bevorzugt bei dem Sterilisationsmedium die gleichen Wege zurückgelegt wie dies während des Arbeitsbetriebs das Blasmedium tut.

Gemäß zumindest einer Ausführungsform ist während des Reinigungsbetriebs der Primärdruck geringer als der Steuerdruck. Dies stellt sicher, dass beispielsweise die oben beschrieben Steuerdruckmembran im Reinigungsbetrieb stets an den unteren Bewegungsanschlag innerhalb der Steuerkammer gepresst ist und damit auch stets in unmittelbarem Kontakt mit der Dichtungseinrichtung, beispielsweise einer flächigen Dichtung ist, so dass zu keinem Zeitpunkt während des Reinigungsbetriebs das Sterilisationsmedium in unmittelbaren Kontakt mit dem Steuermittel, also beispielsweise der Steuerdruckmembran, geraten kann.

Gemäß zumindest einer Ausführungsform ist an dem Regelkolben ein Druckteller angeordnet, wobei der Druckteller eine Tellerdichtung umfasst und in der Zu-Stellung des Regelkolbens die Tellerdichtung die Regelkammer fluiddicht gegenüber dem Sekundärdruckanschluss abschließt. Insofern kann die Tellerdichtung in radialer Richtung, also entlang der Berandung des Drucktellers, diesen vorzugsweise vollständig umranden. In einer Zu-Stellung ist daher die Tellerdichtung, welche an dem Druckteller angeordnet ist oder auch ein Teil des Drucktellers ist, in fluiddichtem Kontakt mit einem inneren Abdichtungssegment, beispielsweise einer vorstehenden Kante innerhalb des Regelkolbens. Zwischen dem inneren Abdichtungssegment innerhalb des Regelkolbens und dem Druckteller kann daher weder Blasluft im Arbeitsbetrieb noch ein Sterilisationsmedium in einem Reinigungsbetrieb hindurchgelangen.

Gemäß zumindest einer Ausführungsform ist die Tellerdichtung mit einer von dem Druckteller und/oder dem Regelkolben lösbaren Dichtenmanschette lösbar an dem Druckteller und/oder dem Regelkolben befestigt.

Bisher war nämlich die Tellerdichtung an dem Regelkolben zwischen dem Druckteller und einer überstehenden Dichtkante des Regelkolbens angeordnet. Dies bringt jedoch den Nachteil mit sich, dass durch das einspannen der Dichtung zwischen dem Druckteller und einer Dichtkante des Regelkolbens die Dichtung vom Benutzer nur sehr schwer vom Regelkolben getrennt werden konnte, da die Dichtkante ein untrennbarer Teil des Regelkolbens selbst ist und einen Eingriff in die Tellerdichtung zum Herausziehen und Lösen sehr schwer macht. Mithin führte dies dazu, dass die Dichtung nur mit großem zeitlichen Aufwand wieder zwischen der überstehenden Dichtkante des Regelkolbens und dem Druckteller eingebracht werden konnte. Als Konsequenz hiervon wurde die Erfahrung gemacht, dass aus Gründen der Zeitersparnis bei Undichtigkeiten und strukturellen Schäden der Tellerdichtung anstatt nur diese auszuwechseln der gesamte Regelkolben oftmals auch inklusive des Drucktellers ausgetauscht werden musste. Selbstverständlich führte dies zu besonders hohen Reparaturkosten. Erdacht wurde nun ein solches System, welches in besonders einfacher, kostengünstiger und insbesondere auch zeitsparender Art und Weise es ermöglicht, vereinfacht die Tellerdichtung von dem Regelkolben zu trennen um nur die Dichtung selbst auszuwechseln ohne einen neuen Regelkolben verwenden zu müssen.

Dazu wurde von einer einstückigen Ausführung der Dichtkante mit dem Rest des Regelkolbens abgesehen und die Dichtkante in einem separaten und von dem Rest des Regelkolbens lösbaren Bauelement untergebracht. Bei diesem separaten Bauelement handelt es sich daher um die obig angesprochene, vorzugsweise einstückige, Dichtmanschette, welche die Dichtkante umfasst. Dabei presst im montierten Zustand die Dichtkante bevorzugt die Tellerdichtung von oben auf den Regelkolben auf. Zudem klemmt die Dichtmanschette die Tellerdichtung in lateraler Richtung, das heißt seitlich, ein. Die Tellerdichtung kann somit weder nach oben verrutschen noch zur Seite hin sich verschieben.

Ist nun die Tellerdichtung fehlerhaft, kann daher zunächst der Regelkolben von der Regelkammer entnommen werden und in einem weiteren Schritt lediglich nur noch die Dichtmanschette von dem Rest des Regelkolbens entfernt werden. Nach Entfernen der Dichtmanschette liegt daher die Dichtung derart frei, dass diese beispielsweise werkzeugfrei auch von dem Druckteller entfernt werden konnte. Nach dem Entfernen kann anschließend eine neue Dichtung in den oder an dem Dichtungsteller eingespannt werden und in einem weiteren darauf folgenden Schritt die Dichtmanschette wieder beispielsweise von oben her auf die Dichtung aufgesetzt und wieder lösbar befestigt werden. Nach dem Wiederbefestigen wird daher die Dichtmanschette mit ihrer überstehenden Kante die Dichtung wieder fest an dem Regelkolben fixieren.

Gemäß zumindest einer Ausführungsform ist die Dichtmanschette in Form einer Überwurfmutter ausgebildet. Es wurde nämlich die Erfahrung gemacht, dass die Ausbildung der Dichtmanschette in Form einer Überwurfmutter im Hinblick auf deren Druck- und Abdichtungseigenschaften vollkommen ausreichend ist. Beispielsweise kann nämlich die Überwurfmutter von oben her einfach randseitig auf die Tellerdichtung ausgesetzt, beispielsweise aufgeschraubt werden, so dass nach dem Festschrauben die Dichtkante der Überwurfmutter die Dichtung an den Regelkolben presst und somit die Dichtung zwischen dem Druckteller und der Überwurfmutter fest eingespannt ist.

Gemäß zumindest einer Ausführungsform ist die Tellerdichtung in Form einer Dichtungsscheibe oder in Form eines O-Rings ausgebildet. Wie obig bereits erwähnt, kann dann die Dichtungsscheibe in Tellerumfangsrichtung den Druckteller vollständig umranden und ist daher in einer Draufsicht randsegmentförmig ausgebildet. Dazu alternativ kann jedoch auch die Dichtung statt einer flächigen, d.h. randsegmentförmigen Ausbildung auch in Form des oben beschriebenen O-Rings ausgebildet sein. Statt also einer randsegmentförmigen Ausbildung weist die Dichtung in einer Draufsicht eine ringförmige Ausgestaltung auf.

Des Weiteren wird in der Anmeldung sowohl eine Vorrichtung zum Umformen von Kunststoffvorformlingen zu Kunststoffbehältnissen als auch ein entsprechendes Verfahren zum Umformen von Kunststoffvorformlingen zu Kunststoffbehältnissen beschrieben, d.h. dass für die hier beschriebene Vorrichtung des hier beschriebenen Verfahrens die gleichen Merkmale wie im Zusammenhang mit der obig beschriebenen Druckregelvorrichtung offenbart sind und umgekehrt.

Gemäß zumindest einer Ausführungsform umfasst die hier beschriebene Vorrichtung einen beweglichen Träger, an dem eine Vielzahl von Umformungsstationen zum Umformen der Kunststoffvorformlinge zu den Kunststoffbehältnissen angeordnet ist, wobei zumindest eine Druckregelvorrichtung angeordnet ist und diese Druckregelvorrichtung dazu eingerichtet und dafür vorgesehen ist, die Kunststoffvorformlinge mit einem Blasdruck eines Primärmediums zu beaufschlagen, um die Kunststoffvorformlinge zu Kunststoffbehältnissen zu expandieren.

Aus der WO 2010/020529 A2 ist eine sterile Blasmaschine bekannt. Der Gegenstand dieser Druckschrift wird hiermit durch Bezugnahme vollumfänglich auch zum Gegenstand der vorliegenden Anmeldung gemacht. Insbesondere geht aus dieser Druckschrift hervor, dass die Blasmaschine in einem Reinraum angeordnet ist.

Der Reinraum kann eine Atmosphäre aufweisen, welche weniger Keime, Verunreinigungen, Bakterien oder Sporen enthält als die Atmosphäre außerhalb des Reinraums. Insbesondere kann hierzu ein Luftfilter an der Vorrichtung angeordnet sein, durch welchen (beispielsweise mittels eines Gebläses) gefilterte Luft in den Reinraum eingeleitet wird. Insbesondere kann es sich bei der eingeleiteten Luft um im Wesentlichen sterile Luft handeln. Insbesondere wird der Reinraum somit unter einem leichten Überdruck gegenüber der Atmosphäre außerhalb des Reinraums gehalten. Der Druckunterschied kann beispielsweise in einem Bereich von 0,1mbar bis 400mbar betragen. Insbesondere kann der Reinraum Abdichtungen aufweisen, welche den Reinraum gegenüber der äußeren Atmosphäre zumindest bereichsweise abdichten. Bei den Dichtungen kann es sich um Dichtungen aus elastischem Material oder um hydraulische Dichtungen wie Wasserschlösser handeln. Die Dichtungen können vorzugsweise kreisförmig entlang des Umfangs des drehenden Trägers ausgebildet sein. Weiterhin können der Reinraum und/oder der Teile der Umformungsstationen, welche sich im Reinraum befinden, in gewissen, insbesondere regelmäßigen, Zeitabständen gereinigt und/oder sterilisiert werden. Vorzugsweise kann eine Reinigung zuerst mit Schaum, dann zum Entfernen des Schaums mit Sterilwasser durchgeführt werden. Eine Sterilisation kann mit gasförmigen Wasserstoffperoxid durchgeführt werden. Die Mittel zum Einbringen der Reinigungs- und Sterilisationsmedien können stationär oder mit dem Träger mitdrehend angeordnete Düsen sein. Auch durch Blasdüsen der Umformungsstationen kann beispielsweise Sterilisationsmedium austreten. Die genannten Mittel zur Bereitstellung des Reinraums oder Kombinationen von ihnen können je nach dem Anforderung an die Hygiene, Sauberkeit oder Sterilität der Maschine oder der mit ihr gefertigten Kunststoffbehältnisse eingesetzt werden.

Insbesondere umfasst die hier beanspruchte Vorrichtung zum Umformen von Kunststoffbehältnissen eine Heizeinrichtung, wobei diese Heizeinrichtung in einer Transportrichtung der Kunststoffvorformlinge stromaufwärts bezüglich der oben erwähnten Vorrichtung angeordnet ist. Diese Heizeinrichtung dient dazu, um die Vorformlinge zu erwärmen, damit diese anschließend in einem Blasvorgang zu Behältnissen expandiert werden können. Stromabwärts bzw. nach der Umformungsvorrichtung ist eine Fülleinrichtung vorgesehen, welche die Behältnisse mit einem Getränk, insbesondere mit einem aseptischen Produkt, befüllt.

Auch diese Fülleinrichtung ist dabei in einem Reinraum angeordnet. Weiterhin erstreckt sich bevorzugt der Reinraum bis in den Bereich einer Verschließeinrichtung, welche die Behältnisse mit einem Verschluss verschließt.

Weiterhin weist die Anlage bevorzugt eine Sterilisationseinrichtung auf, welche wenigstens einen Bereich der Kunststoffvorformlinge vor Erreichen der Vorrichtung sterilisiert. Dabei kann diese Sterilisation mit einem gasförmigen Medium, wie insbesondere Wasserstoffperoxid, durchgeführt werden. Es wäre jedoch auch möglich, dass die Sterilisation unter Verwendung von Strahlung, wie beispielsweise Elektronenstrahlen und/oder UV- Licht bewirkt wird. Dabei ist bevorzugt eine Sterilisationseinrichtung vorgesehen, welche insbesondere auch die Innenoberfläche der Kunststoffvorformlinge sterilisiert. Daneben kann jedoch auch die Außenoberfläche der Kunststoffvorformlinge sterilisiert werden.

Bei einer weiteren vorteilhaften Ausführungsform weist die Vorrichtung einen weiteren Reinraum auf, der in der Transporteinrichtung der Kunststoffvorformlinge vor der oben erwähnten Vorrichtung angeordnet ist. Vorzugsweise geht dieser weitere Reinraum in den Reinraum der Umformungseinrichtung über. Auf diese Weise ist es möglich, die Kunststoffbehältnisse ausgehend von deren Sterilisation kontinuierlich bis zum Verschließen zu fördern und gleichwohl die hierzu nötigen Reinräume relativ gering zu halten. Damit ist bevorzugt der Reinraum als sich von der Sterilisationseinrichtung bis zu der Verschließeinrichtung erstreckender Kanal vorgesehen, der besonders bevorzugt jeweils an die entsprechenden Blasstationen oder Halteeinrichtungen wie Greifelemente für die Vorformlinge oder Kunststoffbehältnisse angepasst ist. Insbesondere ist denkbar, dass die hier beschriebene Druckregelvorrichtung in zumindest einem der obig beschriebenen Reinräume angeordnet ist.

Dabei weist die hier beschriebene Vorrichtung die gleichen vorteilhaften Ausführungsformen und Vorteile auf, wie im Zusammenhang mit der oben beschriebenen Druckregelvorrichtung ausgeführt.

Gemäß zumindest einer Ausführungsform umfasst das hier beschriebene Verfahren zum Umformen von Kunststoffvorformlingen zu Kunststoffbehältnissen wiederum einen beweglichen Träger, an dem eine Vielzahl von Umformungsstationen zum Umformen der Kunststoffvorformlinge zu den Kunststoffbehältnissen angeordnet ist, wobei zumindest eine Druckregelvorrichtung - wie obig gemäß zumindest einer Ausführungsform beschrieben - dazu genutzt wird, die Kunststoffvorformlinge mit einem Blasdruck eines Primärmediums zu beaufschlagen, um die Kunststoffvorformlinge zu Kunststoffbehältnissen zu expandieren. Dabei umfasst das hier beschriebene Verfahren zumindest zwei Betriebsmodi. Einen ersten Betriebsmodus bildet der Arbeitsbetrieb währenddessen die Kunststoffvorformlinge ausgeblasen werden. Einen zweiten Arbeitsbetrieb bildet der Reinigungsbetrieb, während dessen die Blase nur gereinigt und/oder deren Fluidwege sterilisiert werden.

Die Erfindung wird nachfolgend anhand der Figuren 1 - 5 näher erläutert.
Die Figuren 1A und 1B stellen ein aus dem Stand der Technik bekanntes Aufbauprinzip einer Druckregelvorrichtung, insbesondere des Domdruckreglers dar, wobei die
Die Figuren 2 bis 4 zeigen Ausführungsbeispiele einer hier beschriebenen Druckregelvorrichtung.
Die Figur 5 zeigt in einer schematischen Draufansicht ein Ausführungsbeispiel einer Vorrichtung zum Umformen von Kunststoffvorformlingen zu Kunststoffbehältnissen.

In den Ausführungsbeispielen und in den Figuren sind gleiche oder gleichwirkende Bestandteile jeweils mit den gleichen Bezugszeichen versehen. Die hier dargestellten Elemente sind nicht als maßstabsgerecht anzusehen, vielmehr können einzelne Elemente zum besseren Verständnis übertrieben groß dargestellt sein.

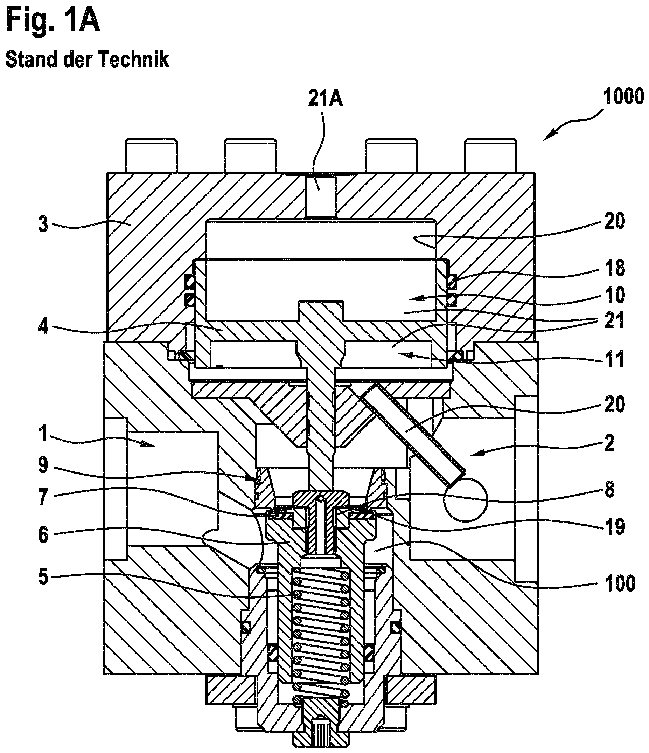

In der Figur 1A ist in einer schematischen Schnittdarstellung ein Ausführungsbeispiel eines bereits aus dem Stand der Technik bekannten Domdruckreglers 1000 gezeigt. Insbesondere ist der in Figur 1A gezeigte Domdruckregler 1000 in einer Zu-Stellung beschrieben.

Erkennbar ist in der Druckregelvorrichtung 1000, dass diese eine Regelkammer 100 umfasst, wobei die Regelkammer 100 einen Primärdruckanschluss 1 zum Einleiten eines Primärmediums mit einem Primärdruck in die Regelkammer 100 sowie einen Sekundärdruckanschluss 2 zum Ausleiten des Primärmediums mit einem Sekundärdruck aus der Regelkammer 100 umfasst und innerhalb der Regelkammer 100 ein Regelkolben 6 verschieblich gelagert ist. Mit anderen Worten kann sich der Regelkolben 6 in der Regelkammer in einer Hubrichtung hin und her bewegen.

Dabei wird der Regelkolben 6 in Abhängigkeit einer Schaltstellung einer Ventilsteuereinrichtung 20 zum Steuern und Einstellen des Primärdrucks und/oder des Sekundärdrucks in einer wie in Figur 1A gezeigten Zu-Stellung beschrieben.

Wie nämlich aus der Figur 1A besonders einfach erkannt werden kann, befindet sich im oberen Bereich, d.h. in einer oberen Druckkammer 10 einer Steuerkammer 21 ein Anschluss für einen Steuerdruck. Dabei wird die obere Druckkammer 10 oftmals in Form einer Kuppel (Dom) beschrieben. Der in der oberen Druckkammer 10 herrschende Druck drückt einen Steuerkolben in Form eines Steuermittels 4 in Richtung der Regelkammer 100, d.h. in Richtung nach unten weg von der oberen Druckkammer 10. Das Steuermittel 4 ist mit Dichtungen 18 randseitig versehen, um die obere Druckkammer 10 (Steuerdruck) von einer unteren Druckkammer 11 zu trennen.

Auf den auf das Steuermittel 4 wirkenden Druck wirkt zusätzlich eine Kraft (Federkraft) von einer Druckfeder 5 entgegen. Über der Druckfeder 5 ist ein Regelkolben 6 angeordnet, der im unteren Bereich an der Außenseite abgedichtet ist. Im Ruhezustand, d.h. in einem Zustand, in welchem kein Steuerdruck von oben auf das Steuermittel in Richtung des Regelkolbens 6 wirkt, ist die Druckregelvorrichtung 1000 geschlossen (Regelkolben 6 in oberer Endlage).

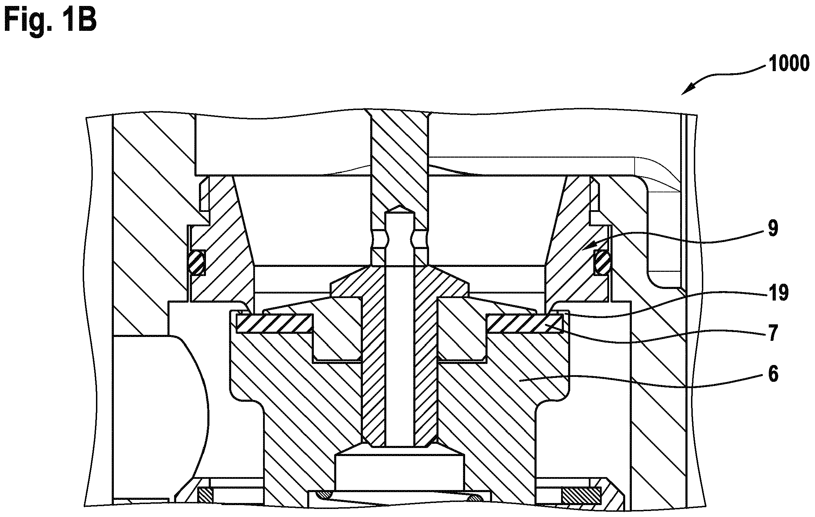

Die Schließung der Druckregelvorrichtung 1000 wird über eine Tellerdichtung 7 erreicht, die oben im Regelkolben 6 angeordnet ist. Mit anderen Worten wird daher im inneren Bereich die Tellerdichtung 7 von einem Druckteller 8 des Regelkolbens und im äußeren Bereich von einer überstehenden Kante 19 des Regelkolbens an dem Regelkolben 6 fixiert. Der Regelkolben 6 wird durch die Druckfeder 5 und den Sekundärdruck nach oben gedrückt. Dabei wird in dem Bereich zwischen der überstehenden Kante 19 und dem fixierten Druckteller 8 eine Dichtkante mit einer vorstehenden Lippe 9 auf die Dichtung gepresst (siehe auch Figur 1 B).

Wird nun ein Steuerdruck beaufschlagt, bewegt sich das Steuermittel 4, d.h. der Steuerkolben, nach unten, wenn die Kraft der Druckfeder 5 überwunden wird. Wir das Steuermittel 4 nach unten bewegt, bewegt sich auch der Regelkolben 6 mit der Tellerdichtung 7 nach unten. Es entsteht ein Spalt zwischen der Tellerdichtung 7 und der Dichtkante 9, so dass nun ein Luftdruck vom Primärdruckanschluss 1 zum Sekundärdruckanschluss 2 übergehen kann.

In vorliegendem Ausführungsbeispiel gemäß dem Stand der Technik ist daher das'Steuermittel 4 in Form des Steuerkolbens 4 in der oberen Druckkammer 10 doppel-T-förmig ausgebildet (im Schnitt), so dass in der oberen Druckkammer 10 der Steuerdruck herrscht. Die zweite Druckkammer 11 ist mit dem Sekundärdruckanschluss 2 über einen Kanal 20 verbunden. Dadurch wirkt der Sekundärdruck, welcher an dem Sekundärdruckanschluss 2 anliegt, dem Steuerdruck entgegen. Wird die obere Druckkammer 10 mit Steuerdruck beaufschlagt, wird der Steuer- und der Regelkolben 6 nach unten gedrückt, wobei somit Druckluft von dem Primärdruckanschluss 1 zu dem Sekundärdruckanschluss 2 strömt. Durch den Kanal 20 strömt der Sekundärdruck auch in die untere Druckkammer 11. Gleichen sich Steuerdruck und Sekundärdruck in der unteren Druckkammer 11 aus, so bewegen sich das Steuermittel 4 und der Regelkolben 6 nach oben und der Luftdurchfluss wird verringert bzw. unterbrochen. Dieser Zustand besteht so lange, bis der Sekundärdruck niedriger als der Steuerdruck ist. In diesem Fall wird das Steuermittel 4 wieder nach unten gedrückt und es kann wieder Druck von dem Primärdruckanschluss 1 in den Sekundärdruckanschluss 2 übergehen.

Solche Druckregelvorrichtungen 1000 können beispielsweise mit einem Primärdruck von wenigstens 35 bis höchstens 45, bevorzugt von wenigstens 38 bis höchstens 42, beispielsweise 40 bar betrieben werden, wobei für einen Sekundärdruck ein Bereich von wenigstens 0,5 und höchstens 38 bar in Frage kommt. Hinsichtlich der Betriebstemperatur kann diese in einem Bereich zwischen 10°C und 40°C liegen. Diese physikalischen Parameter entsprechen daher solchen Parametern, welche im Arbeitsbetrieb Anwendung finden.

In einem Reinigungs- und/oder Sterilisationsbetrieb handelt es sich um einen solchen Betrieb, bei dem der Primärdruck in einem Bereich von wenigstens 1 bar und höchstens 3 bar, beispielsweise 2 bar betrieben wird, wobei ein Sekundärdruck von wenigstens 1 bar und höchstens 3 bar, beispielsweise 2 bar sowie ein Steuerdruck von wenigstens 1 bar und höchstens 5 bar, beispielsweise 3 bar gewählt wird und gleichzeitig die Betriebstemperatur auf einen Bereich von wenigstens 100°C bis höchstens 140°C, beispielsweise 120°C gewählt wird. Als Sterilisationsmedium kann insofern Druckluft gewählt werden, in welches ein Sterilisationsmedium, beispielsweise Wasserstoffperoxid, beigemischt ist.

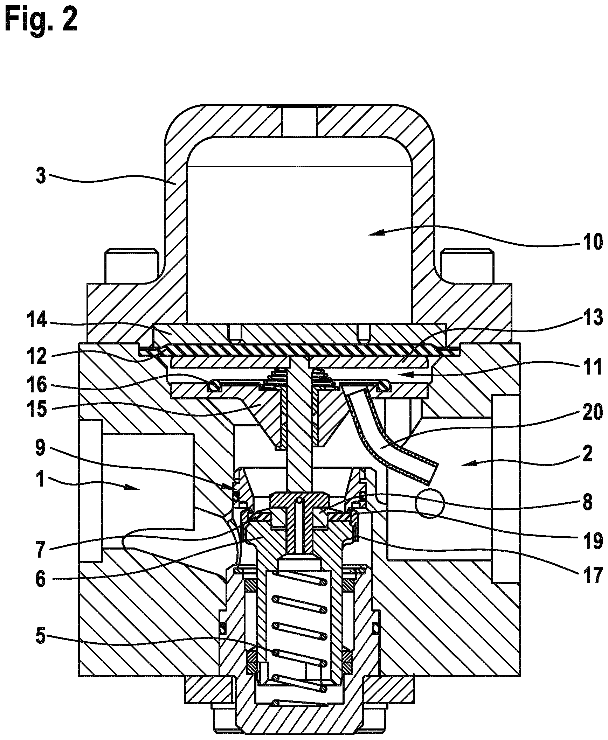

Gemäß dem nunmehr erfindungsgemäßen Ausführungsbeispiel entsprechend der Figur 2 ist der obig beschriebene Steuerkolben 4 durch eine Steuerdruckmembran ersetzt, wobei der prinzipielle Aufbau und die prinzipielle Funktionsweise erhalten bleiben.

Im Unterschied zum Stand der Technik jedoch ist die Steuerdruckmembran 4, 12 nicht nur lediglich zwischen der oberen Druckkammer 10 und der unteren Druckkammer 11 angebracht, sondern die Steuerdruckmembran 12 wird im unteren Bereich von einer Membranscheibe 13 und von der oberen Seite von einer Platte 14 umschlossen. Des Weiteren ist die Steuerdruckmembran 12 im äußeren Bereich mit dem Gehäuse der Steuerkammer 21 fest verbunden und kann sich daher nur in ihrer Krümmung (Aufgrund von Druckveränderungen) ändern.

In einem Reinigungsbetrieb und/oder in einem Sterilisationsbetrieb, wird der Steuerdruck höher gewählt als der Primärdruck, so dass dadurch die Steuerdruckmembran 12 an einen unteren Bewegungsanschlag 15 anschlägt und dort mit einer innerhalb der Steuerkammer 21 angebrachten Dichtungseinrichtung 16 insbesondere einer flächig ausgebildeten Dichtung in Kontakt kommt. Generell ist denkbar, dass die Steuerdruckmembran 12 nur im Reinigungsbetrieb die Dichtungseinrichtung kontaktiert.

Durch den Kontakt mit der Dichtungseinrichtung 16 wird vermieden, dass das Sterilisationsmedium, d.h. die mit Wasserstoffperoxid versetzte Blasluft, hoch zur Steuerdruckmembran 12 gelangt. Insofern ist eine Kontaktierung des Sterilisationsmediums mit der Steuerdruckmembran 12 besonders effektiv und auf einfache Art und Weise vermieden Ein chemischer Angriff auf die Steuermembran und die entsprechenden Folgen wie Undichtigkeit, Blasenbildung oder Risse können somit mehr nicht auftreten.

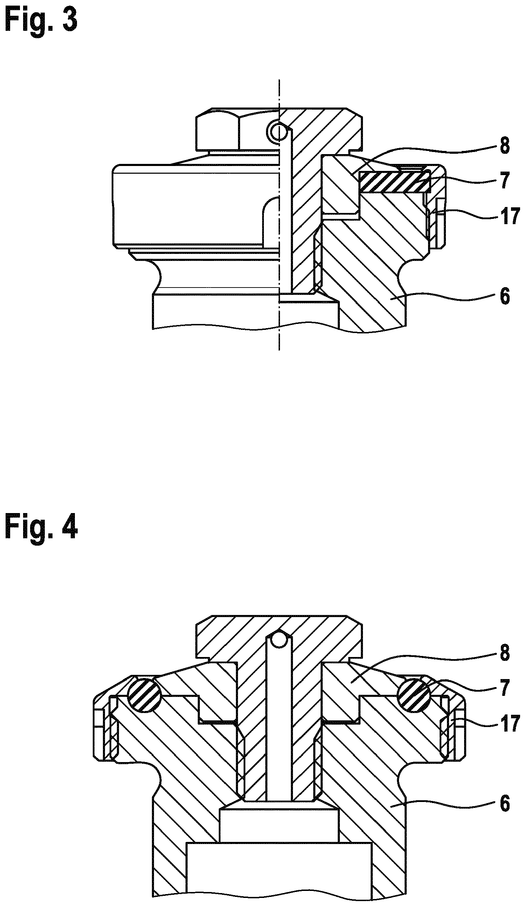

In der Figur 3 ist in einer schematischen Schnittdarstellung ein Ausführungsbeispiel eines hier beschriebenen Regelkolbens 6 gezeigt, an welchem ein Druckteller 8 angeordnet ist, wobei der Druckteller 8 randseitig von einer Tellerdichtung 7 eingefasst ist.

Insbesondere ist erkennbar, dass eine separat vom Rest des Regelkolbens 6 angeordnete Dichtmanschette 17 mit ihrer überstehenden Kante 19 von oben her, d.h. gleichseitig wie ebenso der Druckteller 8, die Tellerdichtung 7 auf den Regelkolben 6 drückt, so dass die Tellerdichtung 7 fest an dem Regelkolben 6, jedoch stets lösbar über eine Lösung der Dichtmanschette 17 von dem Regelkolben 6 montiert ist. Weiter ist dargestellt, dass in der Figur 3 die Dichtmanschette 17 in Form einer Überwurfmutter ausgebildet ist, welche besonders einfach und leichtgängig von oben her auf die Tellerdichtung 7 beispielweise aufgeschraubt oder in sonstiger Weise lösbar angebracht ist. Zum Austausch der Tellerdichtung 7 - sofern diese beispielsweise fehlerhaft ist - braucht daher nur die Überwurfmutter 17 von dem Regelkolben 6 entfernt werden, so dass anschließen nur noch die Tellerdichtung 7 von dem Regelkolben abgezogen zu werden braucht, sofern vorher auch der Druckteller 8 von dem Regelkolben 6 entfernt wurde.

In der Figur 4 ist in einer schematischen Schnittdarstellung alternativ zu dem Ausführungsbeispiel gemäß der Figur 3 statt einer ringsegmentförmig ausgebildeten Tellerdichtung 7 die Tellerdichtung 7 in Form eines O-Rings ausgeführt. Es wurde nämlich die Erfahrung gemacht, dass mit dem oben dargestellten Prinzip des einfachen "Überwerfens" der Dichtmanschette 17 über die Tellerdichtung auch besonders kleinflächige Dichtungen, insbesondere solche Dichtungen, welche in Form von O-Ringen ausgebildet sind, besonders einfach justiert werden können.

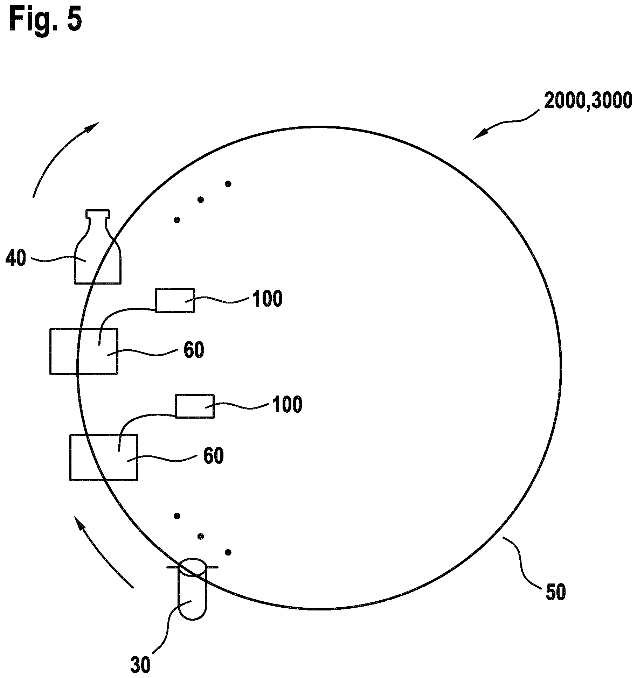

In Figur 5 ist in einer schematischen Draufsicht eine Vorrichtung 2000 zum Umformen von Kunststoffvorformlingen 30 zu Kunststoffbehältnissen 40 dargestellt, welche ebenso mittels eines Verfahrens 3000 zum Umformen von Kunststoffvorformlingen zu Kunststoffbehältnissen durchgeführt werden kann. Erkennbar ist, dass jeder Umformungsstation 60 eine wie obig dargestellte Druckregelvorrichtung 100 zugeordnet und fluidisch in Kontakt stehen kann. Denkbar ist jedoch auch, dass eine Druckregelvorrichtung für eine oder mehrere Umformungseinrichtungen 60 zugeordnet sein kann oder umgekehrt. Jedenfalls kann das gesamte Verfahren innerhalb eines oder mehrerer Sterilräume stattfinden, sodass auch die hier beschriebene Druckregelvorrichtung 100 vollständig in einem Sterilraum angeordnet ist.

Die Erfindung ist nicht durch die Beschreibung anhand der Ausführungsbeispiele beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder in den Ausführungsbeispielen angegeben ist.

### Bezugszeichenliste

- 1: Primärdruckanschluss
- 2: Sekundäranschluss
- 4: Steuermittel
- 5: Druckfeder
- 6: Regelkolben
- 7: Tellerdichtung/Dichtmanschette
- 8: Druckteller
- 9: Lippe
- 10: Druckkammer
- 11: Druckkammer
- 12: Steuerdruckmembran
- 13: Membranplatte
- 16: Dichtungseinrichtung
- 18: Dichtungen
- 19: überstehende Dichtkante
- 20: Ventilsteuereinrichtung/Kanal
- 21: Steuerkammer
- 30: Kunststoffvorformlinge
- 40: Kunststoffbehältnisse
- 60: Umformungseinrichtungen
- 100: Regelkammer
- 1000: Domdruckregler/Druckregelvorrichtung
- 2000: Vorrichtung zum Umformen
- 3000: Verfahren

## Patentansprüche

1. Druckregelvorrichtung (1000), insbesondere Domdruckregler, zum Regeln eines Blasdrucks innerhalb einer Streckblasmaschine, umfassend
- eine Regelkammer (100), wobei die Regelkammer (100) zumindest einen Primärdruckanschluss (1) zum Einleiten eines Primärmediums mit einem Primärdruck in die Regelkammer (100) sowie zumindest einen Sekundärdruckanschluss (2) zum Ausleiten des Primärmediums mit einem Sekundärdruck aus der Regelkammer (100) umfasst, und innerhalb welcher ein Regelkolben (6) verschieblich gelagert ist, und wobei
- der Regelkolben (6) in Abhängigkeit einer Schaltstellung einer Ventilsteuereinrichtung (20) zum Steuern und/oder Einstellen des Primärdrucks und/oder des Sekundärdrucks in einer Offen- und in einer Zu-Stellung betreibbar ist, wobei
- nur in der Offen-Stellung des Regelkolbens (6) das Primärmedium von dem Primärdruckanschluss (1) durch die Regelkammer (100) hindurch zu dem Sekundärdruckanschluss (2) geleitet wird,
- wobei die Ventilsteuereinrichtung (20) eine Steuerkammer (21) umfasst, und die Steuerkammer (21) zumindest einen Steuerdruckanschluss (21A) zum Einleiten eine Steuermediums in die Steuerkammer (21) umfasst, und innerhalb der Steuerkammer (21) ein druckbeaufschlagbares Steuermittel (4, 12) angeordnet ist, wobei das Steuermittel (4, 12) mit dem Regelkolben (6) in Wirkverbindung steht, und wobei das druckbeaufschlagbare Steuermittel (4) in Form einer Steuerdruckmembran (12) ausgeführt ist, welche die Steuerkammer (21) in zwei Druckkammern (10, 11) unterteilt und fluidisch voneinander trennt, und wobei die zweite Druckkammer (11) mit dem Sekundärdruckanschluss (2) über einen Kanal (20) verbunden ist, sodass der Sekundärdruck, welcher an dem Sekundärdruckanschluss (2) anliegt einem Steuerdruck entgegen wirkt **dadurch gekennzeichnet, dass**
an einem unteren Bewegungsanschlag (15) innerhalb der Steuerkammer (21) zumindest eine Dichtungseinrichtung (16) zwischen dem Sekundärdruckanschluss (2) und dem Steuermittel (4, 12) angeordnet ist, welche eine Kontaktierung des Primärmediums mit dem Steuermittel (4, 12) zumindest teilweise, vorzugsweise vollständig, unabhängig vom Steuerdruck und/oder dem Primärdruck verhindert.

2. Druckregelvorrichtung (1000) nach Anspruch 1,
**dadurch gekennzeichnet, dass** die Streckblasmaschine und damit auch die Druckregelvorrichtung (1000) dazu eingerichtet und dafür vorgesehen ist innerhalb eines Reinraums angeordnet zu werden.

3. Druckregelvorrichtung (1000) nach dem vorhergehenden Anspruch,
**dadurch gekennzeichnet, dass**
während des Reinigungsbetriebs der Primärdruck geringer oder gleich als der Steuerdruck ist.

4. Druckregelvorrichtung (1000) zumindest einem der vorhergehenden Ansprüche,
**dadurch gekennzeichnet, dass**
an dem Regelkolben (6) ein Druckteller (8) angeordnet ist, wobei der Druckteller (8) eine Tellerdichtung (7) umfasst, und in der Zu-Stellung des Regelkolbens (6) die Tellerdichtung (7) die Regelkammer (100) fluiddicht gegenüber dem Sekundardruckanschluss (2) abschließt.

5. Druckregelvorrichtung (1000) nach Anspruch 3,
**dadurch gekennzeichnet, dass**
die Tellerdichtung (7) mit einer von dem Druckteller (8) und/oder dem Regelkolben (6) lösbaren Dichtmanschette (17) lösbar an dem Druckteller (8) und/oder dem Regelkolben (6) befestigt ist.

6. Druckregelvorrichtung nach Anspruch 4,
**dadurch gekennzeichnet, dass**
die Dichtmanschette (17) in Form einer Überwurfmutter ausgebildet ist.

7. Druckregelvorrichtung nach Anspruch 3,
**dadurch gekennzeichnet, dass**
die Tellerdichtung (7) in Form einer Dichtungsscheibe oder in Form eines O-Rings ausgebildet ist.

8. Vorrichtung (2000) zum Umformen von Kunststoffvorformlingen (30) zu Kunststoffbehältnissen (40) mit einem beweglichen Träger (50), an dem eine Vielzahl von Umformungsstationen (60) zum Umformen der Kunststoffvorformlinge (30) zu den Kunststoffbehältnissen (40) angeordnet ist,
**gekennzeichnet durch**
zumindest eine Druckregelvorrichtung (100) gemäß einem der vorhergehenden Ansprüche, wobei die Druckregelvorrichtung (100) dazu eingerichtet und dafür vorgesehen ist, die Kunststoffvorformlinge (30) mit einem Blasdruck eines Primärmediums zu beaufschlagen, um die Kunststoffvorformlinge (30) zu Kunststoffbehältnissen (40) zu expandieren.

9. Verfahren (3000) zum Umformen von Kunststoffvorformlingen (30) zu Kunststoffbehältnissen (40) mit einem beweglichen Träger (50), an dem eine Vielzahl von Umformungsstationen (60) zum Umformen der Kunststoffvorformlinge (30) zu den Kunststoffbehältnissen (40) angeordnet ist,
**gekennzeichnet durch**
zumindest eine Druckregelvorrichtung (100) gemäß einem der vorhergehenden Ansprüche 1 bis 7, wobei die Druckregelvorrichtung (100) die Kunststoffvorformlinge (30) mit einem Blasdruck eines Primärmediums beaufschlagt, um die Kunststoffvorformlinge (30) zu Kunststoffbehältnissen (40) zu expandieren.

## Claims

1. Pressure regulator device (1000), in particular a dome-loaded pressure regulator, for regulating a blowing pressure in a stretch blow moulding machine, comprising
- a regulator chamber (100), wherein the regulator chamber (100) comprises at least one primary pressure port (1) for introduction of a primary medium into the regulator chamber (100) with a primary pressure, and at least one secondary pressure port (2) for discharging the primary medium from the regulator chamber (100) with a secondary pressure, and within which a regulator piston (6) is mounted displaceably, and wherein
- the regulator piston (6) can be moved into an open and a closed position, depending on a switch position of a valve control device (20) for controlling and/or setting the primary pressure and/or secondary pressure, wherein
- the primary medium is conducted from the primary pressure port (1) through the regulator chamber (100) to the secondary pressure port (2) only when the regulator piston (6) is in the open position,
- wherein the valve control device (20) comprises a control chamber (21), and the control chamber (21) comprises at least one control pressure port (21A) for introduction of a control medium into the control chamber (21), and a pressurizable control means (4, 12) is arranged inside the control chamber (21), wherein the control means (4, 12) is actively connected to the regulator piston (6), and wherein the pressurizable control means (4) is configured in the form of a control pressure membrane (12) which divides the control chamber (21) into two pressure chambers (10, 11) and separates these fluidically from each other, and wherein the second pressure chamber (11) is connected to the secondary pressure port (2) via a channel (20), such that the secondary pressure applied to the secondary pressure port (2) acts against a control pressure,
**characterized in that**
at least one sealing device (16) is arranged at a lower movement stop (15) inside the control chamber (21) between the secondary control port (2) and the control means (4, 12), which device at least partly, preferably completely, prevents a contact of the primary medium with the control means (4, 12), independently of the control pressure and/or primary pressure.

2. Pressure regulator device (1000) according to claim 1,
**characterized in that**
the stretch blow moulding machine, and hence also the pressure regulator device (1000), are arranged inside a clean room.

3. Pressure regulator device (1000) according to the preceding claim,
**characterized in that**
during cleaning mode, the primary pressure is less than or equal to the control pressure.

4. Pressure regulator device (1000) according to at least one of the preceding claims,
**characterized in that**
a pressure plate (8) is arranged at the regulator piston (6), wherein the pressure plate (8) comprises a plate seal (7) and, in the closed position of the regulator piston (6), the plate seal (7) closes the regulator chamber (100) fluid-tight against the secondary pressure port (2).

5. Pressure regulator device (1000) according to claim 3,
**characterized in that**
the plate seal is attached releasably to the pressure plate (8) and/or the regulator piston (6) with a sealing collar which can be detached from the pressure plate (8) and/or the regulator piston (6).

6. Pressure regulator device according to claim 5,
**characterized in that**
the sealing collar (17) is configured in the form of a union nut.

7. Pressure regulator device according to claim 3,
**characterized in that**
the plate seal (7) is configured in the form of a sealing washer or an O-ring.

8. Device (2000) for forming plastic preforms (30) into plastic containers (40) with a movable carrier (50), on which a plurality of forming stations (60) is arranged for forming the plastic preforms (30) into plastic containers (40),
**characterized by**
at least one pressure regulator device (100) according to any of the preceding claims, wherein the pressure regulator device (100) is configured and provided for pressurizing the plastic preforms (30) with a blowing pressure of a primary medium in order to expand the plastic preforms (30) into plastic containers (40).

9. Method (3000) for forming plastic preforms (30) into plastic containers (40), with a movable carrier (50), on which a plurality of forming stations (60) is arranged for forming the plastic preforms (30) into plastic containers (40),
**characterized by**
at least one pressure regulator device (100) according to any of the preceding claims 1 to 7, wherein the pressure regulator device (100) pressurizes the plastic preforms (30) with a blowing pressure of a primary medium in order to expand the plastic preforms (30) into plastic containers (40).

## Revendications

1. Système de régulation de pression (1000), en particulier régulateur de pression à dôme, destiné à réguler la pression de soufflage à l'intérieur d'une machine d'étirage-soufflage, comprenant
- une chambre de régulation (100), dans lequel la chambre de régulation (100) comporte au moins un raccord de pression primaire (1) pour le refoulement d'un fluide primaire avec une pression primaire dans la chambre de régulation (100) ainsi qu'au moins un raccord de pression secondaire (2) pour l'évacuation du fluide primaire avec une pression secondaire hors de la chambre de régulation (100), et à l'intérieur de laquelle étant logé un piston de régulation (6) coulissant, et dans lequel
- le piston de régulation (6) peut être déplacé vers une position d'ouverture et vers une position de fermeture en fonction d'une position de commutation d'un dispositif de commande de soupape (20) destiné à commander et/ou à régler la pression primaire et/ou la pression secondaire, dans lequel
- le fluide primaire n'étant conduit du raccord de pression primaire (1) au raccord de pression secondaire (2) en traversant la chambre de régulation (100) qu'en position d'ouverture du piston de régulation (6),
- dans lequel le dispositif de commande de soupape (20) comprend une chambre de commande (21), et la chambre de commande (21) comprend au moins un raccord de pression de commande (21A) pour le refoulement d'un fluide de commande dans la chambre de commande (21), et dans lequel un moyen de commande (4, 12) sollicitable en pression étant disposé à l'intérieur de la chambre de commande (21), dans lequel le moyen de commande (4, 12) étant en liaison d'actionnement avec le piston de régulation (6), et dans lequel le moyen de commande (4) sollicitable en pression étant réalisé sous la forme d'une membrane à pression de commande (12) partageant la chambre de commande (21) en deux chambres de pression (10, 11) et les séparant fluidiquement l'une de l'autre, et dans lequel la deuxième chambre de pression (11) étant reliée au raccord de pression secondaire (2) par un canal (20), si bien que la pression secondaire appliquée sur le raccord de pression secondaire (2) s'oppose à une pression de commande, **caractérisé en ce que**
au moins un dispositif d'étanchéité (16) est disposé entre le raccord de pression secondaire (2) et le moyen de commande (4, 12) contre une butée de déplacement inférieure (15) à l'intérieur de la chambre de commande (21), lequel empêche au moins en partie, de préférence totalement, un contact du fluide primaire avec le moyen de commande (4, 12) indépendamment de la pression de commande et/ou de la pression primaire.

2. Système de régulation de pression (1000) selon la revendication 1,
**caractérisé en ce que**
la machine d'étirage-soufflage et ainsi que le système de régulation de pression (1000) sont équipés et prévus pour être disposés à l'intérieur d'une salle blanche.

3. Système de régulation de pression (1000) selon la revendication précédente,
**caractérisé en ce qu'**
en mode nettoyage, la pression primaire est inférieure ou égale à la pression de commande.

4. Système de régulation de pression (1000) selon au moins une des revendications précédentes,
**caractérisé en ce qu'**
une rondelle de pression (8) est disposée sur le piston de régulation (6), dans lequel la rondelle de pression (8) comporte un joint de rondelle (7), et en position de fermeture du piston de régulation (6) le joint de rondelle (7) ferme la chambre de régulation (100) de manière étanche aux fluides par rapport au raccord de pression secondaire (2).

5. Système de régulation de pression (1000) selon la revendication 3,
**caractérisé en ce que**
le joint de rondelle (7) est fixé de manière amovible à la rondelle de pression (8) et/ou au piston de régulation (6) par une garniture d'étanchéité (17) détachable de la rondelle de pression (8) et/ou du piston de régulation (6).

6. Système de régulation de pression selon la revendication 4,
**caractérisé en ce que**
la garniture d'étanchéité (17) est réalisée sous la forme d'un écrou chapeau.

7. Système de régulation de pression selon la revendication 3,
**caractérisé en ce que**
le joint de rondelle (7) est réalisé sous la forme d'un disque d'étanchéité ou sous la forme d'un anneau torique.

8. Dispositif (2000) pour la transformation de préformes en matière plastique (30) en récipients en matière plastique (40), avec un support (50) mobile, sur lequel étant montée une pluralité de stations de formage (60) pour la transformation des préformes en matière plastique (30) en récipients en matière plastique (40),
**caractérisé par**
au moins un système de régulation de pression (100) selon l'une des revendications précédentes, dans lequel le système de régulation de pression (100) est équipé et prévu pour solliciter les préformes en matière plastique (30) avec une pression de soufflage d'un fluide primaire, afin de transformer par expansion les préformes en matière plastique (30) en récipients en matière plastique (40).

9. Procédé (3000) de transformation de préformes en matière plastique (30) en récipients en matière plastique (40) avec un support (50) mobile, sur lequel est montée une pluralité de stations de formage (60) pour la transformation des préformes en matière plastique (30) en récipients en matière plastique (40),
**caractérisé par**
au moins un système de régulation de pression (100) selon l'une des revendications 1 à 7, dans lequel le système de régulation de pression (100) sollicite les préformes en matière plastique (30) avec une pression de soufflage d'un fluide primaire, afin de transformer par expansion les préformes en matière plastique (30) en récipients en matière plastique (40).
